(19) Europäisches Patentamt
European Patent Office
Office européen des brevets

(11) **EP 2 012 000 A1**

(12) **EUROPEAN PATENT APPLICATION**

(43) Date of publication:
**07.01.2009 Bulletin 2009/02**

(51) Int Cl.:
**F02P 5/15** $^{(2006.01)}$

(21) Application number: **07425409.5**

(22) Date of filing: **05.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **MAGNETI MARELLI POWERTRAIN S.p.A.**
**20011 Corbetta (MI) (IT)**

(72) Inventor: **Suglia, Rosanna**
**40133 Bologna (IT)**

(74) Representative: **Jorio, Paolo et al**
**STUDIO TORTA**
**Via Viotti 9**
**10121 Torino (IT)**

(54) **A control method of the ignition advance for a cylinder of an internal combustion engine**

(57)    A control method of the ignition advance (SA) for a cylinder (2) of an internal combustion engine (1); the control method contemplates the steps of: estimating the amount ($X_{EGR\_I}$) of internal exhaust gas trapped inside the cylinder (2) at the end of the previous intake stroke; estimating the amount ($X_{EGR\_E}$) of external exhaust gas which is fed to the cylinder (2) during the intake stroke; determining the total amount ($X_{EGR\_TOT}$) of exhaust gas inside the cylinder (2) at the end of the intake stroke by adding up the amount of internal exhaust gas ($X_{EGR\_I}$) and the amount of external exhaust gas ($X_{EGR\_E}$); and determining the ignition advance (SA) according to the total amount of exhaust gas ($X_{EGR\_TOT}$) inside the cylinder (2) at the end of the intake stroke.

EP 2 012 000 A1

**Description**

TECHNICAL FIELD

The present invention relates to a control method of the ignition advance for a cylinder of an internal combustion engine.

BACKGROUND ART

In an internal combustion engine running according to the "Otto" cycle (i.e. with controlled ignition of the mixture), the ignition advance of the spark plug of each cylinder is normally determined only according to the engine rate (i.e. to the revolution speed of the crankshaft) and/or to the intake pressure (i.e. the average pressure present in the intake manifold). Specifically, an experimentally obtained map which provides the ignition advance according to the engine rate and/or to the intake pressure is stored in a memory of an electronic control unit.

Various systems for seeking to improve fuel combustion inside the cylinders (thus increasing performances and at the same time reducing consumptions and polluting emissions) have been introduced in internal combustion engines over the past years. Specifically, the use of a tumble system (or of an substantially similar swirl system) has been suggested, which is adapted to vary the section of the intake pipes according to the engine rate, as well as the use of an EGR (Exhaust gas Recirculation) system, which is adapted to recirculate a part of the exhaust gases present in the intake manifold by feeding a part of the exhaust gases present in the exhaust manifold into the intake manifold, and the use of a VVT (Variable Valve Timing) system, which is adapted to vary the timing and/or the opening stroke and/or the closing stroke of the intake valves and of the exhaust valves according to the engine rate.

It has been observed that the aforementioned tumble (or swirl), EGR and VVT systems considerably affect the combustion process which occurs inside the cylinder and thus the state of such tumble (or swirl), EGR and VVT systems cannot be disregarded for determining the ignition advance. The solution which has been suggested for taking the state of the tumble (or swirl), EGR and VVT into consideration in ignition advance determination is to use a map stored in a memory of an electronic control unit which supplies the ignition advance according to the engine rate, the intake pressure, and the state of the tumble (or swirl), EGR and VVT systems. However, a map of this type is very large, and thus requires a very expanded memory and is very complex to tune because it is difficult to experimentally find a correlation between the optimal ignition advance and the other variables; consequently, the implementation of a map of this type is very expensive for both the hardware requirements (large memory capacity) and the tuning work.

DISCLOSURE OF INVENTION

It is the object of the present invention to provide a control method of the ignition advance for an internal combustion engine, such a control method being free from the above-described drawbacks, and specifically, being easy and cost-effective to implement.

According to the present invention, a control method of the ignition advance for a cylinder of an internal combustion engine is provided as claimed in the accompanying claims.

BRIEF DESCRIPTION OF THE DRAWINGS

The present invention will now be described with reference to the accompanying drawings illustrating a non-limitative embodiment thereof; specifically, the accompanying figure is a diagrammatic view of an internal combustion engine which implements the control method of the ignition advance object of the present invention.

PREFERRED EMBODIMENTS OF THE INVENTION

In the figure, numeral 1 indicates as a whole an internal combustion engine running according to the "Otto" cycle, i.e. with a controlled ignition of the mixture.

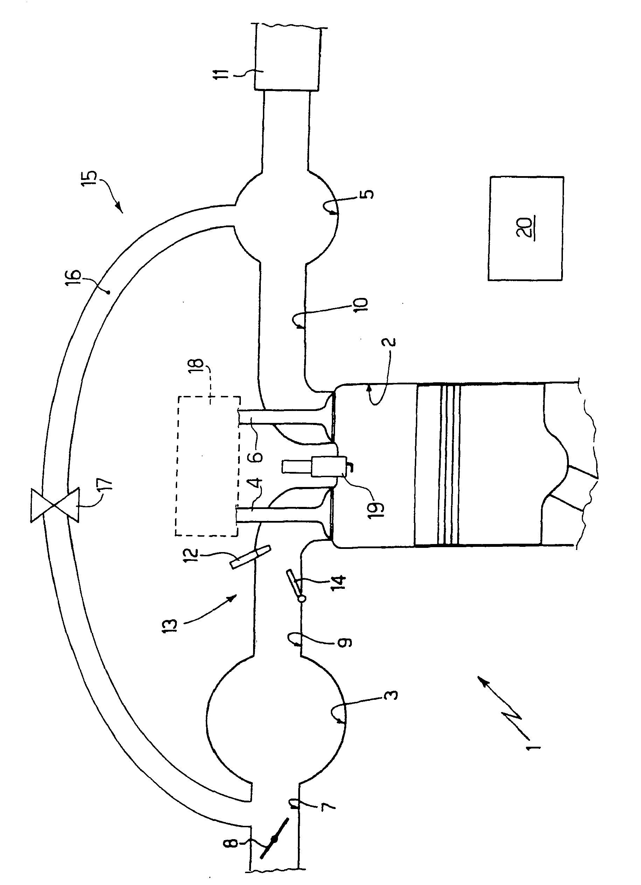

The internal combustion engine 1 is provided with a number of cylinders 2 (of which only one is shown in the figure), each of which is connected to an intake manifold 3 by means of at least one intake valve 4 and to an exhaust manifold 5 by means of at least one exhaust valve 6. The intake manifold 3 receives fresh air (i.e. air from the external environment) through a feeding pipe 7 adjusted by a butterfly valve 8 and is connected to the cylinders 2 by means of corresponding intake pipes 9 (only one of which is shown in figure 1), each of which is adjusted by corresponding intake valves 4. Similarly, the exhaust manifold 5 is connected to the cylinders 2 by means of corresponding exhaust pipes 10 (only one of which is shown in the figure), each of which is adjusted by the corresponding exhaust valve 6; an emission pipe 11, which ends with a muffler (known and not shown) for emitting the gases produced by the combustion into the atmosphere departs from the exhaust manifold 5.

According to a preferred embodiment, the fuel (e.g. petrol, diesel, methane or LPG, etc.) is injected into each intake pipe 9 by means of a corresponding injector 12 arranged near the corresponding intake valve 4. According to a different embodiment (not shown), the injectors 12 are arranged so as to directly inject the fuel into each cylinder 2.

The intake manifold 3 comprises a tumble system 13, which is adapted to vary the section of the intake pipes 9 according to the engine rate (i.e. to the speed of revolution of a crankshaft of the internal combustion engine 1); for each intake pipe 9 the tumble system 13 comprises a choking valve 14, which presents a butterfly keyed onto a shaft for rotating between a position of maximum extraction, in which the butterfly reduces the air introduction section of the corresponding intake pipe 9 to a minimum value, and a rest position, in which the butterfly does not substantially perform any reduction of the air introduction section of the corresponding intake pipe 9.

Furthermore, there is contemplated an EGR (Exhaust gas Recirculation) system 15, which is adapted to recirculate a part of the exhaust gases (i.e. the gases produced by the combustion inside the cylinders 2) present in the exhaust manifold 5 by feeding a part of the exhaust gases present in the exhaust manifold 5 into the intake manifold 3. The EGR system 15 comprises an EGR pipe 16, which puts the exhaust manifold 5 into communication with the intake manifold 3, and an EGR valve 17, which is arranged along the EGR pipe 16 to adjust the introduction of the exhaust gas through the EGR pipe 16 itself.

Finally, there is contemplated a VVT (Variable Valve Timing) system 18, which is adapted to vary the timing and/or the opening and/or closing stroke of the intake valves 4 and of the exhaust valves 5 according to the engine rate.

As previously mentioned, the internal combustion engine 1 runs according to the "Otto" cycle, i.e. with a controlled ignition of the mixture inside the cylinders 2; accordingly, each cylinder 2 is provided with at least one spark plug 19, which is arranged on the roof of the cylinder 2 to cyclically generate sparks which determine the ignition of the mixture inside the cylinder 2 itself. In principle, the mixture inside each cylinder 2 should be ignited at TDC (Top Dead Centre) of the compression stroke; however, the complete ignition of the mixture (i.e. the propagation of the flame front to the entire mixture inside a cylinder 2) requires a certain time and thus each spark plug 19 needs to be controlled with a certain advance with respect to TDC of the compression stroke.

The internal combustion engine 1 comprises an electronic control unit 20, which governs the operation of the internal combustion engine 1 itself and, among other matters, establishes the ignition advance SA of each spark plug 19 and consequently controls the ignition advance of the spark plug 19 itself.

The control method of the ignition advance SA implemented in the electronic control unit 20 contemplates the experimental characterization, for every operating point of the internal combustion engine 1, of the dependency of the combustion time $D_{comb}$ inside each cylinder 2 on the estimate of the total amount of exhaust gas $X_{EGR\_TOT}$ inside the cylinder 2 at the end of the intake stroke. In other words, the control method of the ignition advance SA implemented by the electronic control unit 20 contemplates the determination of the combustion time $D_{comb}$ inside each cylinder 2 according to the total amount of $X_{EGR\_TOT}$ of exhaust gas inside the cylinder 2 at the end of the intake stroke.

It is then simple to obtain the optimal ignition advance value SA from the combustion time $D_{comb}$ inside each cylinder 2. Specifically, the electronic control unit 20 determines the desired crank angle at 50% of mass fraction burnt CA50MFB, i.e. the crank angle at which the pressure peak inside the cylinder 2 occurs, according to the crank position and in a known manner; knowing the required crank angle at 50% of mass fraction burnt CA50MFB and the combustion time $D_{comb}$, it is simple to obtain the ignition advance SA, for example by using the following equation:

$$SA = D_{comb} - CA50MFB$$

SA          ignition advance expressed in crank degrees;
$D_{comb}$          combustion time $D_{comb}$ expressed in crank degrees;
CA50MFB          crank angle at 50% of mass fraction burnt CA50MFB expressed in crank degrees.

The total amount $X_{EGR\_TOT}$ of exhaust gas inside each cylinder 2 at the end of the intake stroke is determined by adding up the amount of internal exhaust gas $X_{EGR\_I}$ trapped inside the cylinder 2 at the end of the previous exhaust stroke and the amount of external exhaust gas $X_{EGR\_E}$ which is fed to the cylinder 2 during the intake stroke. Obviously, if the internal combustion engine 1 were free from the EGR system 15, the amount of external exhaust gas $X_{EGR\_E}$ would always be zero.

The amount of external exhaust gas $X_{EGR\_E}$ which is fed into each cylinder 2 during the intake stroke is estimated in an essentially known manner according to the position of the EGR valve 17 which adjusts the introduction of the exhaust gases through the EGR pipe 16; specifically, the amount of external exhaust gas $X_{EGR\_E}$ which is fed to each cylinder 2 during the intake stroke is estimated according to the position of the EGR valve 17, the engine rate, and the total air mass taken in by the cylinder 2 at the end of the intake stroke.

The amount of internal exhaust gas $X_{EGR\_I}$ trapped inside the cylinder 2 at the end of the previous exhaust stroke is estimated by applying a numerical model of the combustion process, e.g. of the type described in the article "Fox J. W., Cheng W.K., Heywood J.B., A model for predicting residual gas fraction in spark-ignition engines, SAE Technical Paper 931025" incorporated herein for the purpose of reference. It is important to note that many numerical models of the combustion process have been suggested in the literature for estimating the amount of internal exhaust gas trapped inside a cylinder at the end of the exhaust stroke; for example, "Koheler U., Bargende M., A model for a fast prediction of the in-cylinder residual gas mass, SAE Technical Paper 2004-01-3053" and "Schwarx F., Speiher U., Determination of residual gas fraction in IC engines, SAE Technical Paper 2003-01-3148".

Preferably, for each cylinder 2 the ignition advance SA (i.e. the combustion time $D_{comb}$ on the basis of which the ignition advance SA is determined) is determined according to the total amount of exhaust gas $X_{EGR\_TOT}$ inside the cylinder 2 at the end of the intake stroke, according to the revolutions per minute of the internal combustion engine 1 and according to the load of the cylinder 2 expressed in terms of total air mass taken in by the cylinder 2 at the end of the intake stroke. For example, the combustion time $D_{comb}$ may be determined by means of the following equation:

$$D_{comb} = A(N^2, LOAD^2) + B(N^2, LOAD^2) * X_{EGR\_TOT}$$

$$A = a_0 + a_1*N + a_2*LOAD + a_3*N^2 + a_4* LOAD^2 + a_5*N*LOAD$$

$$B = b_0 + b_1*N + b_2*LOAD + b_3*N^2 + b_4* LOAD^2 + b_5*N*LOAD$$

$D_{comb}$     combustion time;
N     revolutions per minute of the internal combustion engine 1;
LOAD     total air mass intaken by the cylinder 2 at the end of the intake stroke;
$X_{EGR\_TOT}$     total amount of exhaust gas inside at the end of the intake stroke;
$a_i$, $b_i$     fixed numeric constants which are experimentally determined.

Summarizing the above, the control method of the ignition advance SA implemented by the electronic control unit 20 contemplates determining the total amount $X_{EGR\_TOT}$ of exhaust gas inside each cylinder 2 at the end of the intake stroke and determining the ignition advance SA according to the total amount $X_{EGR\_TOT}$ of exhaust gas inside the cylinder 2 at the end of the intake stroke; specifically, the combustion time $D_{comb}$ is determined by means of the total amount of exhaust gas $X_{EGR\_TOT}$ inside the cylinder 2 at the end of the intake stroke and, thus the ignition advance SA is calculated by using the combustion time $D_{comb}$ and the desired crank angle at 50% of mass fraction burnt CA50MFB.

The above-described control method of the ignition advance SA presents many advantages because it is simple and cost-effective to implement and because it allows to determine the optimal ignition advance SA with satisfactory accuracy also in an internal combustion engine provided with an EGR system and/or a VVT system. Therefore, the above-described control method of the ignition advance SA allows to reduce the combustion optimization strategy tuning times and costs in an internal combustion engine provided with an EGR system and/or of VVT system.

In other words, the above-described control method of the ignition advance SA greatly reduces experimentation time and costs, by providing the optimal ignition advance SA for all of the possible valve timing configurations and across the entire range of operation of the engine; indeed, in order to calibrate such a strategy, experimental data which contemplate variations in the VVT system are not needed.

## Claims

1. A control method of the ignition advance (SA) for a cylinder (2) of an internal combustion engine (1); the control method comprises the steps of:

    determining the total amount ($X_{EGR\_TOT}$) of an exhaust gas inside the cylinder (2) at the end of the intake stroke; and
    determining the ignition advance (SA) according to the total amount ($X_{EGR\_TOT}$) of exhaust gas inside the cylinder (2) at the end of the intake stroke.

2. A control method according to claim 1, wherein the step of determining the total amount ($X_{EGR\_TOT}$) of exhaust gas inside the cylinder (2) at the end of the intake stroke contemplates the further steps of:

   estimating the amount ($X_{EGR\_I}$) of internal exhaust gas trapped inside the cylinder (2) at the end of the previous intake stroke;
   estimating the amount ($X_{EGR\_E}$) of external exhaust gas which is fed to the cylinder (2) during the intake stroke; and
   determining the total amount ($X_{EGR\_TOT}$) of exhaust gas inside the cylinder (2) at the end of the intake stroke by adding up the amount of internal exhaust gas ($X_{EGR\_I}$) and the amount of external exhaust gas ($X_{EGR\_E}$).

3. A control method according to claim 2, wherein the amount of external exhaust gas ($X_{EGR\_E}$) which is fed to the cylinder (2) during the intake stroke is estimated according to the position of an EGR valve (17) which adjusts the introduction of the exhaust gases through an EGR pipe (16) .

4. A control method according to claim 2 or 3, wherein the amount ($X_{EGR\_I}$) of internal exhaust gas trapped inside the cylinder (2) at the end of the preceding exhaust stroke is estimated by means of a numeric model of the combustion process.

5. A control method according to one of claims from 1 to 4, wherein the ignition advance (SA) is determined according to the total amount ($X_{EGR\_TOT}$) of exhaust gas inside the cylinder (2) at the end of the intake stroke, according to the revolutions per minute of the internal combustion engine (1) and according to the load of the cylinder (2) expressed in terms of total air mass taken in by the cylinder (2) at the end of the intake stroke.

6. A control method according to one of claims from 1 to 5, wherein the step of determining the ignition advance (SA) according to the total amount of exhaust gas ($X_{EGR\_TOT}$) inside at the end of the intake stroke contemplates the further steps of:

   determining the combustion time ($D_{comb}$) inside the cylinder (2) according to the total amount of exhaust gas ($X_{EGR\_TOT}$) inside at the end of the intake stroke; and
   determining the ignition advance (SA) according to the combustion time ($D_{comb}$) within the cylinder (2).
   7) A control method according to claim 6, wherein determining the ignition advance according to the combustion time ($D_{comb}$) inside the cylinder (2) contemplates the further steps of:
   determining a desired crank angle at 50% of mass fraction burnt (CA50MFB);
   determining the ignition advance (SA) according to the combustion time ($D_{comb}$) inside the cylinder (2) and according to the desired crank angle at 50% of mass fraction burnt (CA50MFB).
   8) A control method according to claim 6 or 7, wherein the combustion time ($D_{comb}$) is determined by means of the following equation:

$$D_{comb} = A(N^2, LOAD^2) + B(N^2, LOAD^2) * X_{EGR\_TOT}$$

$$A = (a_0 + a_1*N + a_2*LOAD + a_3*N^2 + a_4* LOAD^2 + a_5*N*LOAD)$$

$$B = (b_0 + b_1*N + b_2*LOAD + b_3*N^2 + b_4* LOAD^2 + b_5*N*LOAD)$$

$D_{comb}$ combustion time;
N revolutions per minute of the internal combustion engine (1);
LOAD total air mass intaken by the cylinder (2) at the end of the intake stroke;
$X_{EGR\_TOT}$ total amount of exhaust gas inside at the end of the intake stroke;
$a_i$, $b_i$ fixed numeric constants.

**European Patent Office**

**EUROPEAN SEARCH REPORT**

Application Number

EP 07 42 5409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 683 963 A (HITACHI LTD [JP]) 26 July 2006 (2006-07-26) * paragraphs [0007], [0044] - [0046], [0058] - [0060], [0077] - [0084], [0089], [0090], [0157] - [0162]; figures 1,7,11,12 * | 1-8 | INV. F02P5/15 |
| X | EP 1 201 921 A (MAGNETI MARELLI POWERTRAIN SPA [IT]) 2 May 2002 (2002-05-02) * paragraphs [0014] - [0019], [0030] - [0033]; figures 1-3 * | 1-8 | |
| X | NICOLÒ CAVINA, ROSANNA SUGLIA: "Spark Advance Control based on a Grey Box Model of the Combustion Process" SAE TECHNICAL PAPER SERIES, no. 2005-01-3760, 24 October 2005 (2005-10-24), - 27 October 2005 (2005-10-27) XP002460949 San Antonio, Texas, USA * the whole document * | 1-8 | |
| X | HEYWOOD, JOHN B.: "Internal Combustion Engige Fundamentals" 1988, MCGRAW-HILL, INC. , USA , XP002460950 * page 827 - page 858 * * page 848 - page 850; table 15.1 * | 1 | TECHNICAL FIELDS SEARCHED (IPC) F02P F02D |
| A | US 4 622 939 A (MATEKUNAS FREDERIC A [US]) 18 November 1986 (1986-11-18) * column 4, line 25 - column 5, line 5 * * column 6, line 47 - line 57 * * column 7, line 20 - line 67 * | 1,5-8 | |
| A | US 2005/039721 A1 (TRUSCOTT ANTHONY J [GB] ET AL) 24 February 2005 (2005-02-24) * figures 5,6,12 * | 1,6-8 | |

The present search report has been drawn up for all claims

| Place of search | Date of completion of the search | Examiner |
|---|---|---|
| Munich | 4 December 2007 | Ulivieri, Enrico |

**ANNEX TO THE EUROPEAN SEARCH REPORT
ON EUROPEAN PATENT APPLICATION NO.**                    EP 07 42 5409

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2007

| Patent document cited in search report | | Publication date | Patent family member(s) | | Publication date |
|---|---|---|---|---|---|
| EP 1683963 | A | 26-07-2006 | JP | 2006200396 A | 03-08-2006 |
| | | | US | 2006157029 A1 | 20-07-2006 |
| EP 1201921 | A | 02-05-2002 | BR | 0105841 A | 25-06-2002 |
| | | | DE | 60101536 D1 | 29-01-2004 |
| | | | DE | 60101536 T2 | 23-09-2004 |
| | | | ES | 2211719 T3 | 16-07-2004 |
| | | | IT | BO20000624 A1 | 29-04-2002 |
| | | | US | 2002056437 A1 | 16-05-2002 |
| US 4622939 | A | 18-11-1986 | DE | 3674147 D1 | 18-10-1990 |
| | | | EP | 0221674 A2 | 13-05-1987 |
| | | | JP | 62103463 A | 13-05-1987 |
| US 2005039721 | A1 | 24-02-2005 | CN | 1543535 A | 03-11-2004 |
| | | | EP | 1458955 A2 | 22-09-2004 |
| | | | WO | 02095191 A2 | 28-11-2002 |
| | | | JP | 2004536250 T | 02-12-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FOX J. W. ; CHENG W.K. ; HEYWOOD J.B**. A model for predicting residual gas fraction in spark-ignition engines. *SAE Technical Paper 931025*
- **KOHELER U. ; BARGENDE M.** A model for a fast prediction of the in-cylinder residual gas mass. *SAE Technical Paper 2004-01-3053*
- **SCHWARX F. ; SPEIHER U.** Determination of residual gas fraction in IC engines. *SAE Technical Paper 2003-01-3148*